# FASCICULE DE BREVET EUROPEEN

(11) **EP 3 353 450 B1**
(45) Date de publication et mention de la délivrance du brevet: **16.09.2020**
(21) Numéro de dépôt: 16784227.7
(22) Date de dépôt: 22.09.2016
(51) Int. Cl.: F16H 57/025, F16D 21/06

(54) **ENSEMBLE DE TRANSMISSION DE COUPLE DESTINE A ÉQUIPER UNE TRANSMISSION D'UN VÉHICULE AUTOMOBILE**
DREHMOMENTÜBERTRAGUNGSANORDNUNG FÜR EIN KRAFTFAHRZEUGGETRIEBE
TORQUE TRANSMISSION ASSEMBLY TO BE PROVIDED IN A MOTOR VEHICLE TRANSMISSION

(30) Priorité: 24.09.2015 FR 1559026
(43) Date de publication de la demande: 01.08.2018
(73) Titulaire: Valeo Embrayages, 80009 Amiens Cedex 2 (FR)
(72) Inventeur: ARHAB, Rabah, 80009 Amiens (FR); RIBOT, Herve, 78322 La Verriere (FR); CAUMARTIN, Laurent, 80009 Amiens (FR); THIBAUT, François, 80009 Amiens (FR); DELPLACE, David, 80009 Amiens (FR)
(86) Numéro de dépôt international: PCT/FR2016/052400
(87) Numéro de publication internationale: WO 2017/051122

(56) Documents cités:
- EP-A1- 2 998 602
- EP-A2- 1 174 631
- DE-A1-102012 201 524
- FR-A1- 2 613 017

## Description

La présente invention concerne un ensemble de transmission de couple destiné à équiper une transmission d'un véhicule automobile.

Un tel ensemble de transmission de couple est destiné à constituer une partie d'une transmission, notamment pour un véhicule automobile ou pour un véhicule dit industriel, ce dernier étant par exemple un poids lourd, un véhicule de transport en commun, ou un véhicule agricole.

La présente invention concerne plus particulièrement un ensemble de transmission de couple comportant notamment un double embrayage humide mobile en rotation autour d'un axe de rotation, qui est commandé pour accoupler sélectivement un arbre menant d'un moteur à explosion à un premier arbre mené et à un deuxième arbre mené d'une boite de vitesses,

On connaît de l'art antérieur des transmissions comportant un mécanisme à double embrayage humide (ou « *Double Wet Clutch* » en anglais) généralement de type multidisques, ledit mécanisme étant implanté dans la cloche d'embrayage du véhicule automobile. Le document EP 2 998 602 A1, considérés comme faisant partie de l'art antérieur selon l'Art. 54(3) CBE, divulgue un ensemble de transmission de couple destine a équiper une transmission de véhicule automobile, comportant au moins: - une cloche d'embrayage, - un module de transmission de couple comprenant: un couvercle, un mécanisme a double embrayage humide mobile en rotation autour d'un axe, et un carter d'embrayage, comportant en tout ou partie un dispositif de distribution d'huile destiné a alimenter le double embrayage humide en huile, le couvercle et le carter d'embrayage étant assembles de manière a former un boîtier définissant un logement dans lequel est reçu au moins en partie le mécanisme à double embrayage humide, caractérisé en ce que, le carter d'embrayage est reçu en tout ou partie dans la cloche d'embrayage et le couvercle comporte une première surface d'appui apte à venir en appui indirect sur un carter de moteur à explosion.

L'intérêt porté à ce type de transmission est croissant en raison de leurs performances obtenues en termes de confort, gain de consommation de carburant et de réduction des émissions de CO₂.

La présente invention a pour but d'améliorer les transmissions de véhicule automobile comprenant un mécanisme à double embrayage humide en proposant :
Un ensemble de transmission de couple destiné à équiper une transmission de véhicule automobile, comportant au moins :
- une cloche d'embrayage,
- un module de transmission de couple comprenant:
   - un couvercle,
   - un mécanisme à double embrayage humide mobile en rotation autour d'un axe, et
   - un carter d'embrayage, comportant en tout ou partie un dispositif de distribution d'huile destiné à alimenter le double embrayage humide en huile,
   le couvercle et le carter d'embrayage étant assemblés de manière à former un boîtier définissant un logement dans lequel est reçu au moins en partie le mécanisme à double embrayage humide,
   l'ensemble de transmission de couple est tel que le carter d'embrayage est reçu en tout ou partie dans la cloche d'embrayage et le couvercle comporte une première surface d'appui apte à venir en appui directement sur un carter de moteur à explosion.

Cet ensemble de transmission de couple, selon l'invention, présente l'avantage, de libérer de l'espace radial au sein du module de transmission de couple, cet espace radial libéré pouvant alors être affecté au mécanisme à double embrayage humide.

La première surface d'appui du couvercle est notamment apte à venir en appui direct sur le carter de moteur à explosion lorsque le module de transmission de couple est assemblé.

Le dimensionnement radial du mécanisme à double embrayage humide peut être augmenté, ce qui présente l'avantage d'améliorer la capacité de transmission de couple et les performances générales du mécanisme à double embrayage humide.

Cet ensemble de transmission de couple, selon l'invention, présente l'avantage, de regrouper les surfaces fonctionnelles d'assemblage du module de transmission de couple et de la cloche d'embrayage avec le carter de moteur sur une seule et même surface d'appui de l'ensemble de transmission de couple. Autrement dit, cette première surface d'appui rassemble les fonctions de positionnement axial du module de transmission de couple et de la cloche d'embrayage.

De préférence, le couvercle, en forme générale de disque autour de l'axe de rotation, présente sur son pourtour extérieur une portion de fixation qui définit la première surface d'appui.

Cet ensemble de transmission de couple, selon l'invention, présente l'avantage, de regrouper les surfaces de fixation de l'ensemble de transmission de couple et du module de transmission de couple sur la transmission de véhicule automobile grâce à une seule et même portion de fixation. Autrement dit, la portion de fixation rassemble les fonctions de positionnement axial et de transmission des efforts entre le carter de moteur à explosion et la cloche d'embrayage.

L'invention peut présenter l'une ou l'autre des caractéristiques décrite ci-dessous combinée entre elles ou prises indépendamment les unes des autres.

De préférence, le couvercle, le mécanisme à double embrayage humide et le carter d'embrayage sont pré-montés pour former un ensemble unitaire.

Selon l'exemple de mise en œuvre de l'invention, le couvercle comporte une deuxième surface d'appui venant en appui sur la cloche d'embrayage.

La première surface d'appui est définit dans un plan perpendiculaire à l'axe de rotation.

Avantageusement, la première surface d'appui et la deuxième surface d'appui appartiennent respectivement à des cotés opposés de la portion de fixation.

De préférence, les première et deuxième surfaces d'appui se chevauchent radialement au moins partiellement.

Avantageusement, les première et deuxième surfaces d'appui sont situées radialement sur le même diamètre.

Selon l'exemple de mise en œuvre de l'invention, le couvercle comporte une première surface de centrage apte à centrer l'ensemble de transmission de couple par rapport au carter de moteur à explosion.

La première surface de centrage est orthogonale à la première surface d'appui du couvercle.

L'axe de révolution de la première surface de centrage est confondu avec l'axe de rotation.

Le couvercle peut comporter une deuxième surface de centrage apte à centrer le carter d'embrayage par rapport au couvercle.

De préférence, la deuxième surface de centrage du couvercle est cylindrique et le couvercle comporte une gorge annulaire qui débouche dans la deuxième surface de centrage.

L'axe de révolution de la deuxième surface de centrage est confondu avec l'axe de rotation.

De préférence, un joint d'étanchéité est disposé entre le couvercle et le carter d'embrayage, ledit joint d'étanchéité étant inséré dans la gorge annulaire de manière à être écrasé lors de l'assemblage du couvercle avec le carter d'embrayage.

Le joint d'étanchéité peut être du type joint torique.

Le joint d'étanchéité est notamment réalisé en matière Nitrile™, Viton™ ou caoutchouc.

Selon l'exemple de mise en oeuvre de l'invention, la portion de fixation du couvercle peut comprendre une troisième surface d'appui située radialement sur un diamètre inférieur à la première surface d'appui, ladite troisième surface d'appui étant apte à recevoir le carter d'embrayage.

La troisième surface d'appui appartient au coté de la portion de fixation opposé à celui auquel appartient la première surface d'appui.

Avantageusement, le carter d'embrayage, en forme générale de cloche autour de l'axe de rotation, présente sur son pourtour extérieur une couronne de fixation apte à venir en appui directement sur la troisième surface d'appui du couvercle.

Le couvercle peut comporter une deuxième surface d'appui venant en appui sur la cloche d'embrayage.

De préférence, la couronne de fixation du carter d'embrayage comprend une troisième surface de centrage apte à centrer le module de transmission de couple par rapport à la cloche d'embrayage.

Avantageusement, la troisième surface de centrage du carter d'embrayage est cylindrique et le carter d'embrayage comporte une gorge annulaire qui débouche dans la troisième surface de centrage.

De préférence, un joint d'étanchéité est disposé entre le carter d'embrayage et la cloche d'embrayage, ledit joint d'étanchéité étant inséré dans la gorge annulaire de manière à être écrasé lors de l'assemblage du module de transmission de couple avec la cloche d'embrayage.

Le joint d'étanchéité peut être du type joint torique.

Le joint d'étanchéité est notamment réalisé en matière Nitrile™, Viton™ ou caoutchouc.

Selon l'exemple de mise en œuvre de l'invention, le couvercle et le carter d'embrayage sont liés entre eux par l'intermédiaire du serrage d'une série de premières vis de fixation.

De préférence, la série de premières vis de fixation est répartie circonférentiellement autour de l'axe de rotation sur la périphérie du couvercle et du carter d'embrayage.

La série de premières vis de fixation peut traverser des orifices aménagés sur la portion de fixation du couvercle et venir se visser dans des perçages-taraudages aménagés sur la couronne de fixation du carter d'embrayage.

Avantageusement, la couronne de fixation du carter d'embrayage présente une série de trous taraudés apte à recevoir la série de premières vis de fixation.

Le couvercle et la cloche d'embrayage peuvent être liés entre eux par l'intermédiaire du serrage d'une série de deuxièmes vis de fixation.

De préférence, la série de deuxièmes vis de fixation est répartie circonférentiellement autour de l'axe de rotation sur la périphérie du couvercle et de la cloche d'embrayage.

Avantageusement, la série de deuxièmes vis de fixation traverse des orifices aménagés sur la portion de fixation du couvercle et vient se visser dans des perçages-taraudages aménagés sur la périphérie de la cloche d'embrayage.

La série de premières vis de fixation et la série de deuxièmes vis de fixation peuvent être situées sur des diamètres d'implantation différents.

L'invention a également pour objet de proposer une transmission de véhicule automobile, pour lier sélectivement en rotation au moins un arbre mené de la boîte de vitesses à un arbre menant du moteur à explosion, ladite transmission comportant au moins :
- un volant moteur lié en rotation à l'arbre menant,
- un mécanisme de filtration des acyclismes,
- une boite de vitesses,
et l'ensemble de transmission de couple tel que défini ci-dessus.

Autrement dit, la transmission de véhicule automobile, pour lier sélectivement en rotation au moins un arbre mené de la boîte de vitesses à un arbre menant du moteur à explosion, peut comporter au moins :
- un volant moteur lié en rotation à l'arbre menant,
- un mécanisme de filtration des acyclismes,
- une cloche d'embrayage,
- un module de transmission de couple comprenant:
   - un couvercle,
   - un mécanisme à double embrayage humide mobile en rotation autour d'un axe, et
   - un carter d'embrayage, comportant en tout ou partie un dispositif de distribution d'huile destiné à alimenter le double embrayage humide en huile,
   dans lequel le couvercle et le carter d'embrayage sont assemblés de manière à former un boîtier définissant un logement dans lequel est reçu au moins en partie le mécanisme à double embrayage humide,
   et dans lequel le couvercle comporte sur son pourtour extérieur une portion de fixation apte à venir en appui sur un carter de moteur à explosion et disposée axialement entre ledit carter de moteur à explosion et la cloche d'embrayage.

Avantageusement, le couvercle et la cloche d'embrayage sont prévus pour être fixés au carter de moteur à explosion par l'intermédiaire du serrage d'une série de troisièmes vis de fixation.

De préférence, la série de troisièmes vis de fixation est répartie circonférentiellement autour de l'axe de rotation sur la périphérie du carter de moteur à explosion.

Les deuxièmes vis de fixation et les troisièmes vis de fixation peuvent être réparties circonférentiellement de manière alternée autour de l'axe de rotation.

Avantageusement, la série de troisièmes vis de fixation traverse des orifices aménagés sur la portion de fixation du couvercle et est apte à venir se visser dans des perçages-taraudages aménagés sur la périphérie du carter de moteur à explosion.

L'invention a également pour objet, selon un autre aspect, de proposer un ensemble de transmission de couple destiné à équiper une transmission de véhicule automobile, comportant au moins :
- une cloche d'embrayage,
- un module de transmission de couple comprenant:
   - un couvercle,
   - un carter d'embrayage, comportant en tout ou partie un dispositif de distribution d'huile destiné à alimenter le double embrayage humide en huile,
   - un mécanisme à double embrayage humide comportant autour d'un axe de rotation au moins un premier embrayage et un deuxième embrayage respectivement de type multidisques, le premier embrayage comportant au moins un premier piston et le deuxième embrayage comportant au moins un deuxième piston, lesdits premier et deuxième pistons étant déplacés axialement en sens opposé pour venir, en position embrayée, serrer un ensemble multidisques contre des moyens de réaction,
   la liaison entre le couvercle et le carter d'embrayage se faisant dans un plan perpendiculaire à l'axe de rotation qui est décalé axialement par rapport aux premier et deuxième embrayages.

La liaison entre le couvercle et le carter d'embrayage est notamment en dehors de l'implantation axiale des ensembles multidisques du premier et du deuxième embrayage.

La liaison entre le couvercle et le carter d'embrayage est notamment décalée en direction du carter de moteur à explosion.

L'ensemble de transmission selon cet autre aspect peut comprendre tout où partie des caractéristiques mentionnées précédemment.

L'invention sera mieux comprise à la lecture de la description qui va suivre, donnée uniquement à titre d'exemple et faite en se référant aux dessins annexés dans lesquels :
- la figure 1 est une vue en perspective d'une chaine cinématique de transmission comportant un ensemble de transmission de couple selon un mode de mise en œuvre privilégié de l'invention ;
- la figure 2 est une vue en coupe de la chaine cinématique de transmission et de l'ensemble de transmission de couple passant par l'axe de rotation X de la figure 1 ;
- la figure 3 est une vue en perspective de l'ensemble de transmission de couple de la figure 1 ;
- la figure 4 est une vue partielle et agrandie de la vue en coupe de l'ensemble de transmission de couple de la figure 2 ;
- la figure 5 est une autre vue en coupe selon V - V de l'ensemble de transmission de couple de la figure 2 ;

Dans la suite de la description et les revendications, on utilisera à titre non limitatif et afin d'en faciliter la compréhension, les termes « avant » ou « arrière » selon la direction par rapport à une orientation axiale déterminée par l'axe X principal de rotation de la transmission du véhicule automobile et les termes « intérieur / interne » ou « extérieur / externe » par rapport à l'axe X et suivant une orientation radiale, orthogonale à ladite orientation axiale.

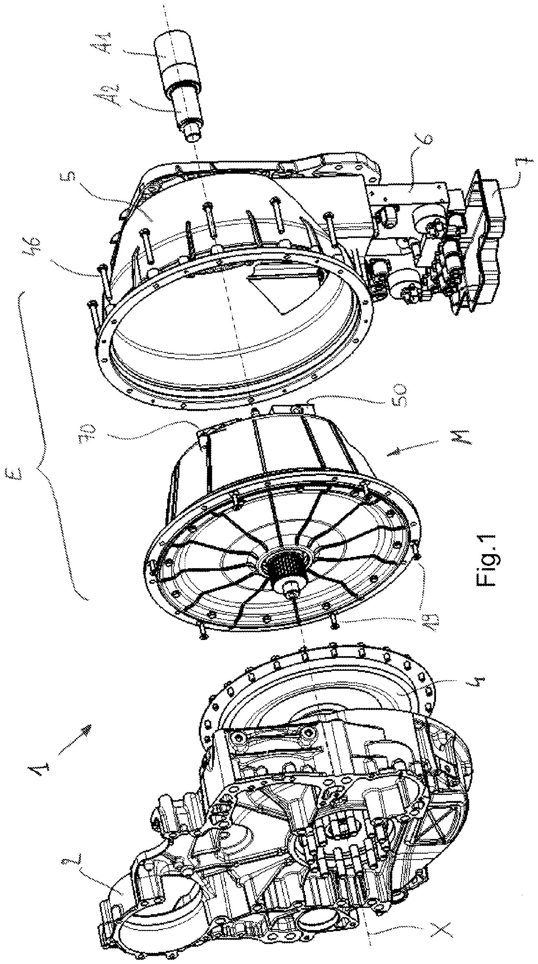

On a représenté sur la figure 1 une transmission 1 d'un véhicule automobile comprenant :
- un volant moteur 3,
- un mécanisme de filtration des acyclismes 4 coopérant avec le volant moteur 3,
- un ensemble de transmission de couple E,
- deux arbres A1, A2 menés d'une boite de vitesses (non représentée) associés à l'ensemble de transmission de couple E.

La transmission 1 de véhicule automobile est assemblée à un carter de moteur à explosion 2.

L'ensemble de transmission de couple E comprend notamment :
- une cloche d'embrayage 5, et
- un module de transmission de couple M comprenant:
   - un couvercle 10,
   - un mécanisme 11 à double embrayage humide mobile en rotation autour de l'axe X, et
   - un carter d'embrayage 12, comportant en tout ou partie un dispositif de distribution d'huile 50 destiné à alimenter le double embrayage humide en huile.

Le mécanisme 11 à double embrayage humide comporte au moins un premier embrayage E1 et un deuxième embrayage E2, qui sont respectivement de type multidisques.

Le module de transmission de couple M, la cloche d'embrayage 5 et le carter d'huile 7 sont assemblés de manière à former un contenant dans lequel est reçu une servocommande 6. La servocommande 6 est fixée sur le module de transmission de couple M. La servocommande 6 a pour fonction de commander l'alimentation en huile du mécanisme 11 à double embrayage humide par l'intermédiaire du dispositif de distribution d'huile 50.

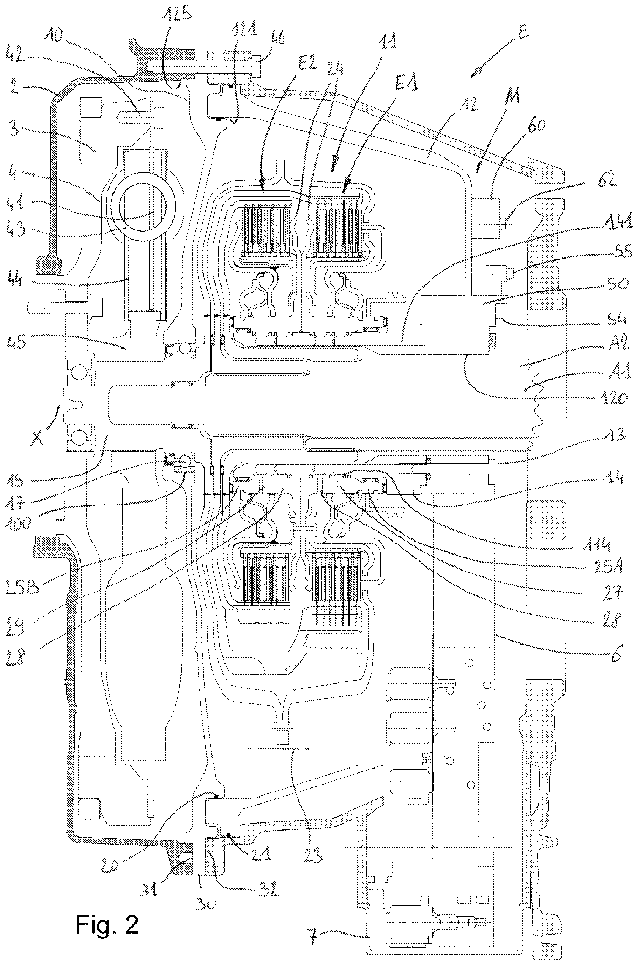

Comme illustré sur la figure 2, le dispositif de distribution d'huile 50 comporte un support de moyeu 14 fixé sur le carter d'embrayage 12. Le support de moyeu 14 et le carter d'embrayage 12 sont liés entre eux par l'intermédiaire du serrage de vis de fixation 13. Le support de moyeu 14 supporte en rotation le mécanisme 11 à double embrayage humide par l'intermédiaire de roulements à aiguille.

Le carter d'huile 7 est fixé sur la cloche d'embrayage 5 par l'intermédiaire du serrage de vis de fixation (non représentées). Un joint d'étanchéité (non représenté) est disposé entre le carter d'huile 7 et la cloche d'embrayage 5 et écrasé par le serrage des vis de fixation de manière à créer une étanchéité à un fluide, par exemple de l'huile, présent dans la cloche d'embrayage 5 et au fond du carter d'huile 7.

On a représenté sur la figure 2 certains composants de la transmission 1 d'un véhicule automobile et les composants du module de transmission de couple M.

Contenu dans le carter de moteur à explosion 2, on trouve le volant moteur 3 fixé sur le vilebrequin du moteur à explosion (non représenté). La transmission du couple moteur depuis le volant moteur vers la boite de vitesses se fait par un mécanisme de filtration des acyclismes 4. Le mécanisme de filtration des acyclismes 4 comprend un voile primaire 41 lié en rotation sur le volant moteur 3 par l'intermédiaire de vis de fixation 42. Le voile primaire 41 est lié par des ressorts hélicoïdaux 43 à un organe secondaire 44 constitué par deux rondelles de guidage solidaire d'un moyeu cannelé 45. Le moyeu cannelé 45 est lié en rotation avec un arbre cannelé 15 d'entrée de couple du module de transmission de couple M.

Comme illustré sur les figures 1 et 2, le couvercle 10 est en forme générale de disque autour de l'axe de rotation X et le carter d'embrayage 12 est en forme générale de cloche. Le couvercle 10 et le carter d'embrayage 12 sont fabriqués en utilisant des procédés de fonderie. Le couvercle 10 et le carter d'embrayage 12 sont assemblés de manière à former un boîtier définissant un logement dans lequel est reçu en partie le mécanisme 11 à double embrayage humide.

Selon l'exemple de mise en œuvre de l'invention présenté sur la figure 2, le carter d'embrayage 12 est reçu entièrement dans la cloche d'embrayage 5. Le carter d'embrayage 12 présente une première ouverture 120 située sur le sommet de la forme en cloche et agencée pour le passage des arbres A1 et A2 de la boite de vitesses de la transmission de véhicule automobile.

Le carter d'embrayage 12 présente une deuxième ouverture 121 délimitée sur son bord par une couronne de fixation 40 et située sur l'embase du carter d'embrayage. La couronne de fixation 40 de forme annulaire présente une section massive destinée à apporter de la rigidité au carter d'embrayage 12. Les première et deuxième ouvertures 120, 121 du carter d'embrayage 12 sont circulaires et concentriques autour de l'axe X. La couronne de fixation 40 vient en appui sur le couvercle 10.

En variante, le carter d'embrayage 12 peut-être reçu en partie dans la cloche d'embrayage 5.

Le couvercle 10 présente sur son pourtour extérieur une portion de fixation 30 de forme circulaire. La portion de fixation 30 définit une première surface d'appui 31 qui vient en appui directement sur le carter de moteur à explosion 2. La première surface d'appui 31 est perpendiculaire à l'axe X. La portion de fixation 30 est en contact avec le carter d'embrayage 12. Plus précisément, la couronne de fixation 40 du carter d'embrayage 12 vient en appui directement sur la portion de fixation 30 du couvercle 10.

Le couvercle 10 présente également une ouverture centrale 100 agencée pour le passage d'un arbre cannelé 15 d'entrée de couple du mécanisme 11 à double embrayage humide. L'arbre cannelé 15 s'étend axialement vers l'extérieur du module M et traverse le couvercle 10 par ladite ouverture centrale 100. Le couvercle 10 est rigidifié à l'aide de nervures s'étendant radialement depuis l'ouverture centrale 100 jusqu'à la portion de fixation 30.

L'arbre cannelé 15 d'entrée de couple est guidé en rotation sur le couvercle 10 par l'intermédiaire d'un roulement à bille 17. L'ouverture centrale 100 du couvercle 10 comprend une portée cylindrique sur laquelle est frettée le roulement à bille 17. Le roulement à bille 17 assure également l'étanchéité en huile sur la partie arrière du module de transmission de couple M.

Le mécanisme à double embrayage humide 11 présente une enveloppe externe 23 de forme générale de révolution. Cette enveloppe externe 23 définie le volume tournant du mécanisme 11 à double embrayage humide.

L'assemblage du carter d'embrayage 12 avec le couvercle 10 se fait dans un plan perpendiculaire à l'axe de rotation X qui est décalé axialement par rapport au mécanisme 11 à double embrayage humide. Le plan d'assemblage est, dans l'exemple décrit, décalé axialement vers l'arrière du module de transmission M de telle sorte que la liaison entre le couvercle 10 et le carter d'embrayage 12 est décalé axialement par rapport aux premier et deuxième embrayages E1 et E2. Le plan d'assemblage est en dehors de l'implantation axiale des ensembles multidisques.

Le décalage axial du plan d'assemblage présente l'avantage de libérer de l'espace radial au sein du module de transmission de couple, cet espace radial libéré pouvant alors être affecté au mécanisme à double embrayage humide.

Le dimensionnement radial du mécanisme à double embrayage humide défini par l'enveloppe externe 23 peut être augmenté, ce qui présente l'avantage d'améliorer la capacité de transmission de couple.

Le mécanisme 11 à double embrayage humide est commandé pour accoupler sélectivement ledit arbre menant à un premier arbre A1 mené et à un deuxième A2 arbre mené de la boite de vitesses.

De préférence, le premier arbre A1 mené et le deuxième A2 arbre mené sont coaxiaux.

Le premier arbre A1 mené est entraîné en rotation lorsque ledit premier embrayage E1 est fermé et le deuxième A2 arbre mené est entraîné en rotation lorsque ledit deuxième embrayage E2 est fermé, lesdits premier et deuxième arbres A1, A2 menés étant respectivement reliés à une boîte de vitesses équipant le véhicule automobile.

Dans le mécanisme 11 à double embrayage humide, le premier embrayage E1 sert par exemple à la fois au démarrage et à l'engagement des rapports impairs et le deuxième embrayage E2 prend alors en charge les rapports pairs et la marche arrière, en variante les rapports pris en charge par lesdits premier et deuxième embrayages E1 et E2 sont inversés.

Le premier embrayage E1 est par exemple agencé axialement à l'avant du côté de la boîte de vitesses et le deuxième embrayage E2 est par exemple agencé axialement à l'arrière du côté du moteur.

Le premier embrayage E1 et le deuxième embrayage E2 transmettent alternativement la puissance d'entrée (le couple et la vitesse) de l'arbre menant, que reçoit la coquille 22 d'entrée du mécanisme 11, à l'un des deux arbres A1, A2 menés, en fonction de l'état ouvert ou fermé de chacun des embrayages E1 et E2.

De préférence, le premier embrayage E1 et le deuxième embrayage E2 sont à l'état ouvert, encore dit « normalement ouvert », et sont actionnés sélectivement en fonctionnement par une servocommande 6 pour passer de l'état ouvert à l'état fermé.

Le premier embrayage E1 comporte au moins un premier piston et le deuxième embrayage E2 comporte au moins un deuxième piston, lesdits premier et deuxième pistons étant déplacés axialement en sens opposé pour venir, en position embrayée, serrer un ensemble multidisques contre des moyens de réaction 24. Les moyens de réactions 24 sont liés en rotation à la coquille 22 d'entrée par une liaison rivetée.

Le mécanisme 11 à double embrayage humide est commandé hydrauliquement par l'intermédiaire d'un fluide sous pression, généralement de l'huile.

Pour commander sélectivement le changement d'état du premier embrayage E1 et du deuxième embrayage E2 du mécanisme 11 du module de transmission de couple M, le dispositif de distribution d'huile 50 utilise le support de moyeu 14 comportant des canaux 141 d'alimentation en huile, par exemple au nombre de quatre tel que représenté sur la figure 2.

Le support de moyeu 14 comprend également quatre gorges annulaires 114 usinées sur la périphérie externe dudit support de moyeu et dans lesquelles débouchent respectivement et de manière indépendante les canaux 141 d'alimentation en huile.

De manière complémentaire, le mécanisme 11 à double embrayage humide comporte au moins un moyeu 25A, 25B comportant des perçages radiaux qui sont chacun reliés à l'un des canaux 141 d'alimentation en huile.

De préférence, ledit au moins un moyeu est réalisé en deux parties, un premier moyeu 25A et un deuxième moyeu 25B respectivement associés au premier embrayage E1 et au deuxième embrayage E2. Les moyens de réactions 24 sont liés en rotation avec les moyeux 25A et 25B.

Le premier moyeu 25A comporte deux perçages radiaux 26 et 27 qui sont associés à la commande du premier embrayage E1 situé axialement à l'avant et le deuxième moyeu 25B comporte également deux perçages radiaux 28 et 29 qui sont associés à la commande du deuxième embrayage E2 situé axialement à l'arrière.

Les premier et deuxième moyeux 25A et 25B pivotent autour du support de moyeu 14 suivant l'axe de rotation X.

Ainsi, les quatre gorges annulaires 114 du support de moyeu 14 sont disposées axialement en regard des perçages 26, 27, 28 et 29 des moyeux 25A et 25B de manière à alimenter séparément les chambres de piston hydraulique des embrayages E1 et E2. Un joint d'étanchéité est disposé entre chaque gorge de manière à assurer l'étanchéité entre les différents canaux d'alimentation. Le joint d'étanchéité est généralement de type torique.

On a représenté sur les figures 1 et 2, le carter d'embrayage 12, comportant un dispositif de distribution d'huile 50 destiné à alimenter le double embrayage humide en huile. Le dispositif de distribution d'huile 50 comporte lui-même une boite de dérivation d'huile 51 supportée en tout ou partie par le carter d'embrayage 12 et le moyeu de support 14. Dans l'exemple décrit, la boite de dérivation d'huile 51 est intégrée au carter d'embrayage 12. Les canaux 141 d'alimentation d'huile du support de moyeu 14 sont reliés aux canalisations de sortie de la boite de dérivation 51.

Comme illustré sur la figure 2, la boite de dérivation d'huile 51 entoure partiellement la première ouverture 120 du carter d'embrayage. La boite de dérivation d'huile 51 comporte des canaux d'alimentation en huile (non représentés) destinés également à acheminer l'huile depuis l'extérieur du module de transmission de couple M jusqu'au mécanisme 11 à double embrayage humide.

Le dispositif de distribution d'huile 50 tel que représenté sur les figures 1 à 3 comprend deux pompes 60, 70 supportées par le carter d'embrayage 12. Le carter d'embrayage 12 dispose de zones d'appui généralement usinée dans la masse servant de face de fixation aux carters des pompes 60, 70. Les pompes sont fixées mécaniquement sur le carter d'embrayage 12 à l'aide de vis de fixation.

La pompe 70 est ici du type basse pression avec comme fonction principale de prélever de l'huile depuis le fond du carter d'huile 7 et de la refouler jusqu'à un circuit de refroidissement situé en dehors de la cloche d'embrayage 5.

La compréhension du fonctionnement du circuit de circulation d'huile à basse pression sera plus facile à la lecture du paragraphe suivant :
L'huile est aspirée depuis le fond du carter d'huile 7 par la pompe basse pression à l'aide d'un tuyau (non représenté) plongeant dans le réservoir d'huile. Le tuyau est relié à un connecteur hydraulique d'entrée de la pompe basse pression. La pompe basse pression 70 refoule l'huile en direction d'un échangeur thermique par l'intermédiaire d'un connecteur de sortie (non représenté). L'huile refroidie sous l'action de l'échangeur thermique revient dans la boite de dérivation d'huile 51 par l'intermédiaire d'un connecteur d'entrée 54. L'huile refroidie circule dans la boite de dérivation d'huile 51 avant d'être envoyée directement dans la servocommande 6.

La pompe 60 est ici du type haute pression 60 avec comme principale fonction de prélever de l'huile depuis le fond du carter d'huile 7 et de la refouler jusqu'à un filtre à huile situé en dehors de la cloche d'embrayage 5.

La compréhension du fonctionnement du circuit de circulation d'huile à haute pression sera plus facile à la lecture du paragraphe suivant :
L'huile est aspirée depuis le fond du carter d'huile 7 par la pompe haute pression à l'aide d'un tuyau (non représenté) plongeant dans le réservoir d'huile. Le tuyau est relié à un connecteur hydraulique d'entrée de la pompe haute pression. La pompe haute pression 60 refoule l'huile en direction tout d'abord d'un filtre à huile par l'intermédiaire d'un connecteur de sortie 62. L'huile filtrée en raison de son passage dans le filtre à huile revient dans la boite de dérivation d'huile 51 par l'intermédiaire d'un connecteur d'entrée 55. L'huile filtrée circule dans la boite de distribution d'huile 51 avant d'être envoyée directement dans la servocommande 6.

La servocommande 6 a pour principale fonction de piloter l'alimentation en huile des chambres de piston hydraulique des embrayages E1 et E2. Pour cela, la servocommande 6 envoie de l'huile sous pression dans les canaux 141 d'alimentation d'huile du support de moyeu 14 par l'intermédiaire de la boite de dérivation d'huile 51.

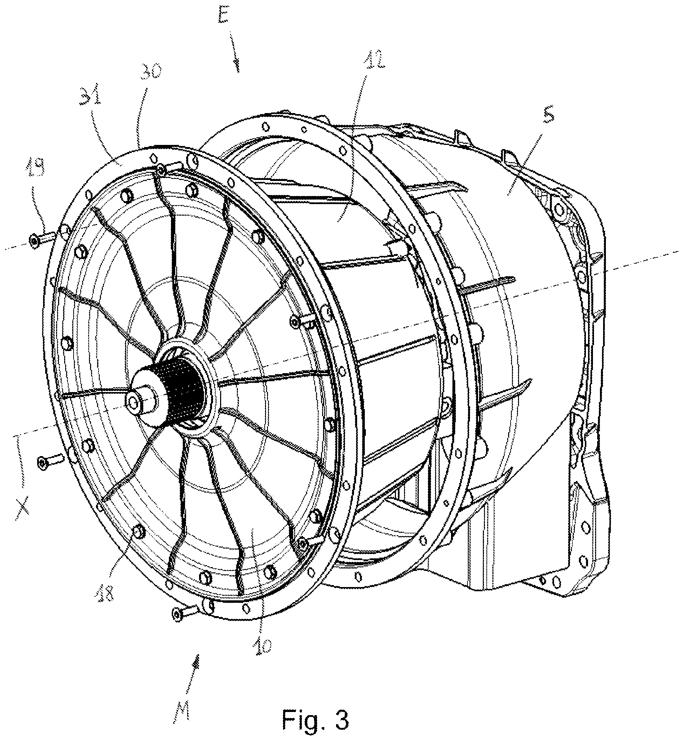

La figure 3 présente une vue en perspective de la liaison de la cloche d'embrayage 5 avec le module de transmission M.

Le couvercle 10 et le carter d'embrayage 12 sont liés entre eux par l'intermédiaire du serrage d'une série de premières vis de fixation 18. La série de premières vis de fixation 18 traverse des orifices aménagés sur la portion de fixation 30 du couvercle 10 et vient se visser dans des perçages-taraudages aménagés sur la couronne de fixation 40 du carter d'embrayage 12. Les têtes des premières vis de fixation 18 sont en appui sur la portion de fixation 30.

La série de premières vis de fixation 18 est répartie circonférentiellement autour de l'axe X sur la périphérie du couvercle 10 et du carter d'embrayage 12. De cette manière, le couvercle 10, le mécanisme 11 à double embrayage humide et le carter d'embrayage 12 sont pré-montés pour former un ensemble unitaire. Avantageusement, le pré-montage peut se faire directement sur la chaine de montage du fournisseur d'embrayage.

Le couvercle 10 et la cloche d'embrayage 5 sont liés entre eux par l'intermédiaire du serrage d'une série de deuxièmes vis de fixation 19. La série de deuxièmes vis de fixation 19 traverse des orifices aménagés sur la portion de fixation 30 du couvercle 10 et vient se visser dans des perçages-taraudages aménagés sur la périphérie de la cloche d'embrayage 5. Les têtes des deuxièmes vis de fixation 19 sont logées dans des évidements aménagés sur la première surface d'appui 31. De cette manière, l'encombrement axial de la portion de fixation 30 est réduit.

La série de deuxièmes vis de fixation 19 est répartie circonférentiellement autour de l'axe X sur la périphérie du couvercle 10 et de la cloche d'embrayage 5.

La série de premières vis de fixation 18 et la série de deuxièmes vis de fixation 19 sont situées sur des diamètres d'implantation différents. La série de premières vis de fixation 18 est située sur un diamètre d'implantation inférieur à celui de la série de deuxièmes vis de fixation 19.

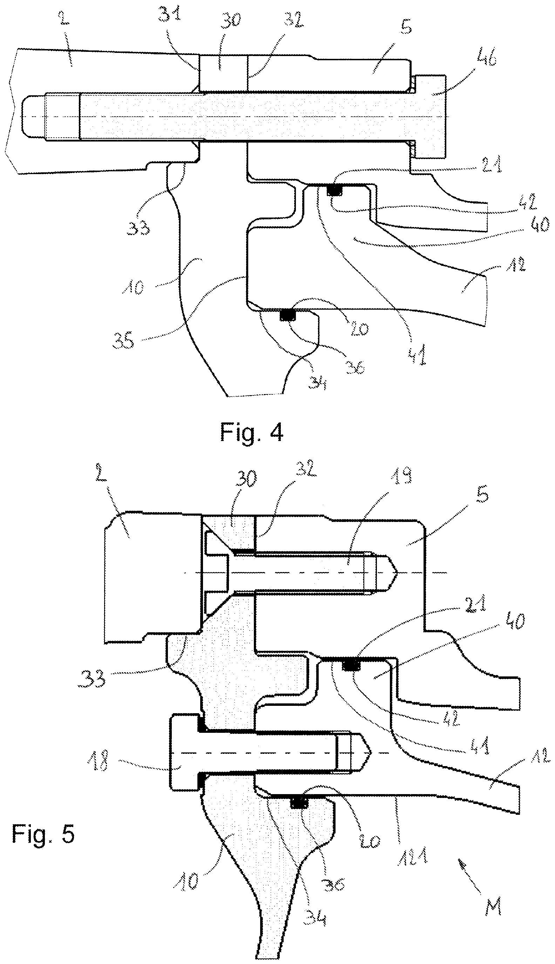

La figure 4 présente une vue de détail de la liaison de l'ensemble de transmission de couple E avec le carter de moteur à explosion 2.

Le couvercle 10 présente sur la portion de fixation 30 une deuxième surface d'appui 32 venant en appui sur la cloche d'embrayage 5. La première surface d'appui 31 et la deuxième surface d'appui 32 appartiennent respectivement à des cotés opposés de la portion de fixation 30. La portion de fixation 30 du couvercle est disposée axialement entre ledit carter de moteur à explosion 2 et la cloche d'embrayage 5. Dans l'exemple décrit, les première et deuxième surfaces d'appui 31 et 32 se chevauchent radialement. Les surfaces d'appui 31 et 32 sont usinées pour garantir les tolérances géométriques d'assemblage.

Le couvercle 10 comporte une première surface de centrage 33 apte à centrer l'ensemble de transmission de couple E par rapport au carter de moteur à explosion 2. Cette première surface de centrage 33 est usinée et vient se loger dans un alésage intérieur 125 du carter de moteur à explosion 2.

La première surface de centrage 33 est également orthogonale à la première surface d'appui 31 du couvercle 10.

Le couvercle 10 et la cloche d'embrayage 5 sont fixés au carter de moteur à explosion 2 par l'intermédiaire du serrage d'une série de troisièmes vis de fixation 46. La série de troisièmes vis de fixation 46 est répartie circonférentiellement autour de l'axe X sur la périphérie du carter de moteur à explosion 2. Dans l'exemple décrit, la série de troisièmes vis de fixation 46 traverse des orifices aménagées sur la portion de fixation 30 du couvercle 10 et vient se visser dans des perçages-taraudages aménagés sur la périphérie du carter de moteur à explosion 2.

Les deuxièmes vis de fixation 19 et les troisièmes vis de fixation 46 sont réparties circonférentiellement de manière alternée autour de l'axe X.

La figure 5 présente une vue de détail de la liaison du module de transmission M par rapport à la cloche d'embrayage 5.

Le couvercle 10 comporte une deuxième surface de centrage 34 cylindrique apte à centrer le carter d'embrayage 12 par rapport au dit couvercle 10. L'axe de révolution de la deuxième surface de centrage 34 est confondu avec l'axe X. Cette deuxième surface de centrage 34 est usinée et vient se loger dans la deuxième ouverture 121 du carter d'embrayage 12.

Le module de transmission de couple M a notamment pour fonction de contenir le volume d'huile nécessaire au fonctionnement du mécanisme 11 à double embrayage humide. Un joint d'étanchéité 20 est disposé radialement entre le couvercle 10 et le carter d'embrayage 12. Le couvercle 10 comporte une gorge 36 annulaire qui débouche dans la deuxième surface de centrage 34. Notamment, le joint d'étanchéité 20 est inséré dans la gorge 36 annulaire de manière à être écrasé lors de l'assemblage du couvercle 10 avec le carter d'embrayage 12.

Le joint d'étanchéité 20 est du type joint torique. La matière du joint peut être en Nitrile™, Viton™ ou en caoutchouc.

Comme illustré sur les figures 4 et 5, la portion de fixation 30 du couvercle 10 comprend une troisième surface d'appui 35 située radialement sur un diamètre inférieur à la première surface d'appui 31. Cette troisième surface d'appui 31 est apte à recevoir le carter d'embrayage 12. La troisième surface d'appui 35 appartient au coté de la portion de fixation 30 opposé à celui auquel appartient la première surface d'appui 31.

La couronne de fixation 40 vient en appui directement sur la troisième surface d'appui 35 du couvercle 10.

La couronne de fixation 40 du carter d'embrayage 12 comprend une troisième surface de centrage 41 apte à centrer le module de transmission de couple M par rapport à la cloche d'embrayage 5. La troisième surface de centrage 41 du carter d'embrayage 12 est cylindrique.

L'ensemble de transmission de couple M a notamment pour fonction de contenir le volume d'huile nécessaire au fonctionnement du module de transmission de couple.

Un joint d'étanchéité 21 est disposé entre le carter d'embrayage 12 et la cloche d'embrayage 5. Le carter d'embrayage 12 comporte une gorge 42 annulaire qui débouche dans la troisième surface de centrage 41. Notamment, le joint d'étanchéité 21 est inséré dans la gorge 42 annulaire de manière à être écrasé lors de l'assemblage du module de transmission de couple M avec la cloche d'embrayage 5.

Le joint d'étanchéité 21 est du type joint torique. La matière du joint peut être en Nitrile™, Viton™ ou en caoutchouc.

L'utilisation de l'invention décrite précédemment ne se limite pas aux mécanismes à double embrayage humide dans lesquels les premier et deuxième embrayages sont implantés axialement l'un à coté de l'autre. L'invention s'applique également aux mécanismes à double embrayage humide dans lesquels les premier et deuxième embrayages sont implantés axialement sur un même plan et par conséquence superposés radialement. Suivant cette autre architecture, l'ensemble de transmission de couple présente les mêmes avantages en termes de facilité de montage sur la transmission de véhicule automobile.

## Revendications

1. Ensemble de transmission de couple (E) destiné à équiper une transmission (1) de véhicule automobile, comportant au moins :
- une cloche d'embrayage (5),
- un module de transmission de couple (M) comprenant:
• un couvercle (10),
• un mécanisme (11) à double embrayage humide mobile en rotation autour d'un axe (X), et
• un carter d'embrayage (12), comportant en tout ou partie un dispositif de distribution d'huile destiné à alimenter le double embrayage humide en huile,
le couvercle (10) et le carter d'embrayage (12) étant assemblés de manière à former un boîtier définissant un logement dans lequel est reçu au moins en partie le mécanisme à double embrayage humide,
**caractérisé en ce que** le carter d'embrayage (12) est reçu en tout ou partie dans la cloche d'embrayage (5) et le couvercle (10) comporte une première surface d'appui (31) apte à venir en appui directement sur un carter de moteur à explosion (2).

2. Ensemble de transmission de couple (E) selon la revendication 1, **caractérisé en ce que** le couvercle (10), en forme générale de disque autour de l'axe (X), présente sur son pourtour extérieur une portion de fixation (30) qui définit la première surface d'appui (31).

3. Ensemble de transmission de couple (E) selon la revendication 1 ou 2, **caractérisé en ce que** le couvercle (10) comporte une deuxième surface d'appui (32) venant en appui sur la cloche d'embrayage (5).

4. Ensemble de transmission de couple (E) selon la revendication 3, **caractérisé en ce que** la première surface d'appui (31) et la deuxième surface d'appui (32) appartiennent respectivement à des cotés opposés de la portion de fixation (30).

5. Ensemble de transmission de couple (E) selon l'une des revendications précédentes, **caractérisé en ce que** le couvercle (10) comporte une première surface de centrage (33) apte à centrer l'ensemble de transmission de couple par rapport au carter de moteur à explosion (2).

6. Ensemble de transmission de couple (E) selon l'une des revendications précédentes, **caractérisé en ce que** le couvercle (10) comporte une deuxième surface de centrage (34) apte à centrer le carter d'embrayage (12) par rapport au couvercle (10).

7. Ensemble de transmission de couple (E) selon la revendication 6, **caractérisé en ce que** la deuxième surface de centrage (34) du couvercle (10) est cylindrique et le couvercle (10) comporte une gorge (36) annulaire qui débouche dans la deuxième surface de centrage (34), et **en ce qu'**un joint d'étanchéité (20) est disposé entre le couvercle (10) et le carter d'embrayage (12), ledit joint d'étanchéité est inséré dans la gorge (36) annulaire de manière à être écrasé lors de l'assemblage du couvercle (10) avec le carter d'embrayage (12).

8. Ensemble de transmission de couple (E) selon l'une quelconque des revendications 2 à 7, **caractérisé en ce que** la portion de fixation (30) du couvercle (10) comprend une troisième surface d'appui (35) située radialement sur un diamètre inférieur à la première surface d'appui (31), ladite troisième surface d'appui étant apte à recevoir le carter d'embrayage (12).

9. Ensemble de transmission de couple (E) selon la revendication 8, **caractérisé en ce que** le carter d'embrayage (12), en forme générale de cloche autour de l'axe (X), présente sur son pourtour extérieur une couronne de fixation (40) apte à venir en appui directement sur la troisième surface d'appui (35) du couvercle (10).

10. Ensemble de transmission de couple (E) selon la revendication 9, **caractérisé en ce que** la couronne de fixation (40) du carter d'embrayage (12) comprend une troisième surface de centrage (41) apte à centrer le module de transmission de couple (M) par rapport à la cloche d'embrayage (5).

11. Ensemble de transmission de couple (E) selon la revendication 10, **caractérisé en ce que** la troisième surface de centrage (41) du carter d'embrayage (12) est cylindrique et le carter d'embrayage (12) comporte une gorge (42) annulaire qui débouche dans la troisième surface de centrage (41) et **en ce qu'**un joint d'étanchéité (21) est disposé entre le carter d'embrayage (12) et la cloche d'embrayage (5), ledit joint d'étanchéité (21) est inséré dans la gorge (42) annulaire de manière à être écrasé lors de l'assemblage du module de transmission de couple (M) avec la cloche d'embrayage (12).

12. Ensemble de transmission de couple (E) selon l'une quelconque des revendications 2 à 11, **caractérisé en ce que** le couvercle (10) et le carter d'embrayage (12) sont liés entre eux par l'intermédiaire du serrage d'une série de premières vis de fixation (18), ladite série de premières vis de fixation (18) traversant des orifices aménagés sur la portion de fixation (30) du couvercle (10) et venant se visser dans des perçages-taraudages aménagés sur la couronne de fixation (40) du carter d'embrayage (12).

13. Ensemble de transmission de couple (E) selon l'une quelconque des revendications 2 à 12, **caractérisé en ce que** le couvercle (10) et la cloche d'embrayage (5) sont liés entre eux par l'intermédiaire du serrage d'une série de deuxièmes vis de fixation (19), ladite série de deuxièmes vis de fixation (19) traversant des orifices aménagés sur la portion de fixation (30) du couvercle (10) et venant se visser dans des perçages-taraudages aménagés sur la périphérie de la cloche d'embrayage (5).

14. Transmission (1) de véhicule automobile, pour lier sélectivement en rotation au moins un arbre (A1, A2) mené de la boîte de vitesses à un arbre menant du moteur à explosion, ladite transmission (1) comportant au moins :
- - un volant moteur (3) lié en rotation à l'arbre menant,
- - un mécanisme de filtration des acyclismes (4),
- - une boite de vitesses,
laquelle transmission comporte l'ensemble de transmission de couple (E) selon l'une quelconque des revendications 1 à 13.

15. Transmission (1) de véhicule automobile selon la revendication 14, **caractérisé en ce que** le couvercle (10) et la cloche d'embrayage (5) sont prévus pour être fixés au carter de moteur à explosion (2) par l'intermédiaire du serrage d'une série de troisièmes vis de fixation (46), ladite série de troisièmes vis de fixation (46) traversant des orifices aménagées sur la portion de fixation (30) du couvercle (10) et étant apte à venir se visser dans des perçages-taraudages aménagés sur la périphérie du carter de moteur à explosion (2).

## Patentansprüche

1. Drehmomentübertragungsanordnung (E), die zum Ausrüsten eines Kraftfahrzeuggetriebes (1) bestimmt ist und mindestens Folgendes umfasst:
- eine Kupplungsglocke (5),
- ein Drehmomentübertragungsmodul (M), das Folgendes beinhaltet:
• einen Deckel (10),
• einen Mechanismus (11) mit nasser Doppelkupplung, der um eine Achse (X) drehbar ist, und
• ein Kupplungsgehäuse (12), das ganz oder teilweise eine Ölverteilungsvorrichtung umfasst, die dazu bestimmt ist, die nasse Doppelkupplung mit Öl zu versorgen,
wobei der Deckel (10) und das Kupplungsgehäuse (12) so zusammengefügt sind, dass sie einen Kasten bilden, der eine Aufnahme definiert, in der der Mechanismus mit nasser Doppelkupplung mindestens teilweise aufgenommen ist,
**dadurch gekennzeichnet, dass** das Kupplungsgehäuse (12) ganz oder teilweise in der Kupplungsglocke (5) aufgenommen ist und der Deckel (10) eine erste Anlagefläche (31) umfasst, die fähig ist, direkt an einem Gehäuse eines Verbrennungsmotors (2) anzuliegen.

2. Drehmomentübertragungsanordnung (E) nach Anspruch 1, **dadurch gekennzeichnet, dass** der Deckel (10), der um die Achse (X) im Allgemeinen scheibenförmig ist, an seinem Außenumfang einen Befestigungsabschnitt (30) aufweist, der die erste Anlagefläche (31) definiert.

3. Drehmomentübertragungsanordnung (E) nach Anspruch 1 oder 2, **dadurch gekennzeichnet, dass** der Deckel (10) eine zweite Anlagefläche (32) umfasst, die an der Kupplungsglocke (5) anliegt.

4. Drehmomentübertragungsanordnung (E) nach Anspruch 3, **dadurch gekennzeichnet, dass** die erste Anlagefläche (31) und die zweite Anlagefläche (32) jeweils zu entgegengesetzten Seiten des Befestigungsabschnitts (30) gehören.

5. Drehmomentübertragungsanordnung (E) nach einem der vorhergehenden Ansprüche, **dadurch gekennzeichnet, dass** der Deckel (10) eine erste Zentrierfläche (33) umfasst, die fähig ist, die Drehmomentübertragungsanordnung in Bezug auf das Gehäuse des Verbrennungsmotors (2) zu zentrieren.

6. Drehmomentübertragungsanordnung (E) nach einem der vorhergehenden Ansprüche, **dadurch gekennzeichnet, dass** der Deckel (10) eine zweite Zentrierfläche (34) umfasst, die fähig ist, das Kupplungsgehäuse (12) in Bezug auf den Deckel (10) zu zentrieren.

7. Drehmomentübertragungsanordnung (E) nach Anspruch 6, **dadurch gekennzeichnet, dass** die zweite Zentrierfläche (34) des Deckels (10) zylindrisch ist und der Deckel (10) eine ringförmige Nut (36) umfasst, die in die zweite Zentrierfläche (34) mündet, und dass eine Dichtung (20) zwischen dem Deckel (10) und dem Kupplungsgehäuse (12) angeordnet ist, wobei die Dichtung so in die ringförmige Nut (36) eingeführt ist, dass sie beim Zusammenfügen des Deckels (10) mit dem Kupplungsgehäuse (12) zusammengequetscht wird.

8. Drehmomentübertragungsanordnung (E) nach einem der Ansprüche 2 bis 7, **dadurch gekennzeichnet, dass** der Befestigungsabschnitt (30) des Deckels (10) eine dritte Anlagefläche (35) beinhaltet, die an einem Durchmesser, der kleiner als die erste Anlagefläche (31) ist, radial positioniert ist, wobei die dritte Anlagefläche fähig ist, das Kupplungsgehäuse (12) aufzunehmen.

9. Drehmomentübertragungsanordnung (E) nach Anspruch 8, **dadurch gekennzeichnet, dass** das Kupplungsgehäuse (12), das um die Achse (X) im Allgemeinen glockenförmig ist, an seinem Außenumfang einen Befestigungskranz (40) aufweist, der fähig ist, direkt an der dritten Anlagefläche (35) des Deckels (10) anzuliegen.

10. Drehmomentübertragungsanordnung (E) nach Anspruch 9, **dadurch gekennzeichnet, dass** der Befestigungskranz (40) des Kupplungsgehäuses (12) eine dritte Zentrierfläche (41) beinhaltet, die fähig ist, das Drehmomentübertragungsmodul (M) in Bezug auf die Kupplungsglocke (5) zu zentrieren.

11. Drehmomentübertragungsanordnung (E) nach Anspruch 10, **dadurch gekennzeichnet, dass** die dritte Zentrierfläche (41) des Kupplungsgehäuses (12) zylindrisch ist und das Kupplungsgehäuse (12) eine ringförmige Nut (42) umfasst, die in die dritte Zentrierfläche (41) mündet, und dass eine Dichtung (21) zwischen dem Kupplungsgehäuse (12) und der Kupplungsglocke (5) angeordnet ist, wobei die Dichtung (21) so in die ringförmige Nut (42) eingeführt ist, dass sie beim Zusammenfügen des Drehmomentübertragungsmoduls (M) mit der Kupplungsglocke (12) zusammengequetscht wird.

12. Drehmomentübertragungsanordnung (E) nach einem der Ansprüche 2 bis 11, **dadurch gekennzeichnet, dass** der Deckel (10) und das Kupplungsgehäuse (12) durch das Festziehen einer Vielzahl von ersten Befestigungsschrauben (18) miteinander verbunden sind, wobei die Vielzahl von ersten Befestigungsschrauben (18) durch Öffnungen verlaufen, die an dem Befestigungsabschnitt (30) des Deckels (10) eingerichtet sind, und in Bohrungen mit Innengewinde eingeschraubt werden, die an dem Befestigungskranz (40) des Kupplungsgehäuses (12) eingerichtet sind.

13. Drehmomentübertragungsanordnung (E) nach einem der Ansprüche 2 bis 12, **dadurch gekennzeichnet, dass** der Deckel (10) und die Kupplungsglocke (5) durch das Festziehen einer Vielzahl von zweiten Befestigungsschrauben (19) miteinander verbunden sind, wobei die Vielzahl von zweiten Befestigungsschrauben (19) durch Öffnungen verlaufen, die an dem Befestigungsabschnitt (30) des Deckels (10) eingerichtet sind, und in Bohrungen mit Innengewinde eingeschraubt werden, die an dem Umfang der Kupplungsglocke (5) eingerichtet sind.

14. Kraftfahrzeuggetriebe (1), um mindestens eine Abtriebswelle (A1, A2) des Schaltgetriebes selektiv drehfest mit einer Antriebswelle des Verbrennungsmotors zu verbinden, wobei das Getriebe (1) mindestens Folgendes umfasst:
- ein Schwungrad (3), das mit der Antriebswelle drehfest verbunden ist,
- einen Mechanismus zum Herausfiltern von zyklischen Unregelmäßigkeiten (4),
- ein Schaltgetriebe,
wobei das Getriebe die Drehmomentübertragungsanordnung (E) nach einem der Ansprüche 1 bis 13 umfasst.

15. Kraftfahrzeuggetriebe (1) nach Anspruch 14, **dadurch gekennzeichnet, dass** der Deckel (10) und die Kupplungsglocke (5) dazu vorgesehen sind, durch das Festziehen einer Vielzahl von dritten Befestigungsschrauben (46) an dem Gehäuse des Verbrennungsmotors (2) befestigt zu werden, wobei die Vielzahl von dritten Befestigungsschrauben (46) durch Öffnungen verlaufen, die an dem Befestigungsabschnitt (30) des Deckels (10) eingerichtet sind, und fähig sind, in Bohrungen mit Innengewinde eingeschraubt zu werden, die an dem Umfang des Gehäuses des Verbrennungsmotors (2) eingerichtet sind.

## Claims

1. A torque-transmission assembly (E) designed to equip a motor-vehicle transmission (1), comprising:
a clutch housing (5); and,
a torque-transmission module (M) including a cover plate (10), a wet double-clutch mechanism (11), which can move rotationally around an axis (X), and a clutch casing (12) containing all or part of an oil-distribution device designed to supply the wet double-clutch with oil,
wherein the cover plate (10) and the clutch casing (12) being assembled in such a way as to form a box defining a housing in which the wet double-clutch mechanism is received at least partly, and
**characterized in that** the clutch casing (12) is received completely or partly in the clutch housing (5) and the cover plate (10) has a first bracing surface (31) capable of being braced directly on an internal combustion engine crankcase (2).

2. The torque-transmission assembly (E) according to claim 1, wherein the cover plate (10) generally disk-shaped around the axis (X), has on its outer periphery a fixation portion (30) that defines the first bracing surface (31).

3. The torque-transmission assembly (E) according to claim 1 or 2, wherein the cover plate (10) has a second bracing surface (32) that becomes braced on the clutch housing (5).

4. The torque-transmission assembly (E) according to claim 3, wherein the first bracing surface (31) and the second bracing surface (32) belong respectively to opposite sides of the fixation portion (30).

5. The torque-transmission assembly (E) according to anyone of the claims, wherein the cover plate (10) has a first centering surface (33) capable of centering the torque-transmission assembly relative to the internal combustion engine crankcase (2).

6. The torque-transmission assembly (E) according to anyone of the claims, wherein the cover plate (10) has a second centering surface (34) capable of centering the clutch casing (12) relative to the cover plate (10).

7. The torque-transmission assembly (E) according to claim 6, wherein the second centering surface (34) of the cover plate (10) is cylindrical and the cover plate (10) has an annular groove that leads to the second centering surface (34), and in that a seal (20) is disposed between the cover plate (10) and the clutch casing (12), wherein the said seal is inserted into the annular groove in such a way that it is compressed during assembly of the cover plate (10) with the clutch casing (12).

8. The torque-transmission assembly (E) according to one of the claims 2 to 7, wherein the fixation portion (30) of the cover plate (10) comprises a third bracing surface (35) situated radially over a diameter smaller than the first bracing surface (31), wherein the said third bracing surface is capable of receiving the clutch casing (12) .

9. The torque-transmission assembly (E) according to claim 8, wherein the clutch casing (12), generally bell-shaped around the axis (X), has on its outer periphery a fixation collar (40) capable of being braced directly on the third bracing surface (35) of the cover plate (10).

10. The torque-transmission assembly (E) according to claim 9, wherein the fixation collar (40) of the clutch casing (12) comprises a third centering surface (41) capable of centering the torque-transmission module (M) relative to the clutch housing (5).

11. The torque-transmission assembly (E) according to claim 10, wherein the third centering surface (41) of the clutch casing (12) is cylindrical and the clutch casing (12) has an annular groove (42) that leads to the third centering surface (41), and in that a seal (21) is disposed between the clutch casing (12)and the clutch housing (5), wherein the said seal (21) is inserted into the annular groove (42) in such a way that it is compressed during assembly of the torque-transmission module (M) with the clutch housing (5).

12. The torque-transmission assembly (E) according to anyone of the claims 2 to 11, wherein the cover plate (10) and the clutch casing (12) are connected to one another by way of tightening of a series of first fixation screws (18), wherein the said series of first fixation screws (18) passes through orifices made on the fixation portion (30) of the cover plate (10) and become screwed into drilled-tapped holes made in the fixation collar (40) of the clutch casing (12).

13. The torque-transmission assembly (E) according to anyone of the claims 2 to 12, wherein the cover plate (10) and the clutch housing (5) are connected to one another by way of tightening of a series of second fixation screws (19), wherein the said series of second fixation screws (19) passes through orifices made on the fixation portion (30) of the cover plate (10) and become screwed into drilled-tapped holes made in the periphery of the clutch housing (5).

14. A motor-vehicle transmission (1) for selectively joining at least one driven shaft (A1, A2) of the gearbox to rotate with a driving shaft of the internal combustion engine, wherein the transmission (1) has at least:
an engine flywheel (3) linked in rotation with the driving shaft,
a mechanism (4) for filtration of acyclical irregularities,
a gearbox,
which transmission comprises the torque-transmission assembly (E) according to anyone of the claims 1 to 13.

15. The motor-vehicle transmission according to claim 14, wherein the cover plate (10) and the clutch housing (5) are provided to be fixed on the internal combustion engine crankcase (2) by way of tightening of a series of third fixation screws (46), wherein the said series of third fixation screws (46) passes through orifices made on the fixation portion (30) of the cover plate (10) and are capable of becoming screwed into drilled-tapped holes made in the periphery of the internal combustion engine crankcase (2).
